# EUROPEAN PATENT APPLICATION

(11) **EP 1 675 202 A1**
(43) Date of publication of application: **28.06.2006**
(21) Application number: 05257892.9
(22) Date of filing: 20.12.2005
(51) Int. Cl.: H01M 8/12, H01M 8/06, H01M 8/04

(54) **Solid oxide fuel cell with internal combustion chamber**

(30) Priority: 21.12.2004 JP 2004369231
(71) Applicant: SHINKO ELECTRIC INDUSTRIES CO., LTD., Nagano-shi, Nagano 381-2287 (JP)
(72) Inventor: Horiuchi, Michio, c/o Shinko Electric Industries, Nagano-shi Nagano 381-2287 (JP); Suganuma, Shigeaki,c/o Shinko Electric Industries, Nagano-shi Nagano 381-2287 (JP); Watanabe, Misa,c/o Shinko Electric Industries, Nagano-shi Nagano 381-2287 (JP); Tokutake, Yasue,c/o Shinko Electric Industries, Nagano-shi Nagano 381-2287 (JP)
(74) Representative: Finnie, Peter John

(57) **Abstract**

A solid oxide fuel cell in which one or more cell units of the fuel cell are disposed within or in proximity to a flame, produced upon combustion of a fuel material, and are exposed to the flame, thereby generating electricity. In the solid-oxide fuel cell, the fuel cell is provided with a combustion chamber for combusting the fuel material, the combustion chamber has a configuration of a cylinder, and a wall of the cylindrical combustion chamber is defined by the cell units of the fuel cell, and the cell units comprise a substrate consisting of a solid electrolyte, an anode layer formed on a combustion chamber side of the substrate and a cathode layer formed on another side of the substrate opposed to the anode layer. The combustion chamber is especially suitable for the combustion of solid fuels.

## Description

### Field of the Invention

The present invention relates to fuel cells, more particularly, to solid electrolyte-type or solid oxide fuel cells in which the cell units of the fuel cell are disposed within or in proximity to a flame and are exposed to the flame to thereby generate electricity.

### Background to the Invention

Hitherto, fuel cells have been developed and practically used as a low-emission electricity generation means to be used in place of steam-power generation means and as an electric energy source for electric vehicles to be used in place of vehicles using gasoline and other fuels. Especially, recently, fuel cells have been widely and positively studied to improve their efficiency and reduce the cost of the fuel cells.

As is well known, fuel cells are classified by the electricity generation system and, among the well-known fuel cells, increased electricity generation efficiency can be expected from the fuel cells using a solid electrolyte, i.e., solid-oxide fuel cells (hereinafter, also referred to as SOFCs). As the SOFCs ensure an extended durability and a diminished production cost in addition to the high electricity generation efficiency, use of the SOFCs is attractive in a wide variety of technical fields.

In one typical example of a solid oxide fuel cell, a sintered body consisting of yttria (Y₂O₃)-stabilized zirconia (YSZ) is used in the formation of an oxygen ion-conducting solid electrolyte layer. In this fuel cell, a cathode.layer is applied on one surface of the electrolyte layer, while an anode layer is applied on an opposite surface of the electrolyte layer. Further, oxygen or an oxygen-containing gas is supplied to the side of the cathode layer, while a fuel gas such as methane is supplied to the side of the anode layer. The resulting cell unit constituted from the electrolyte layer, the anode layer and the cathode layer is contained in a chamber to form a fuel cell.

In the fuel cell, oxygen (O₂) supplied to the cathode layer is ionized in an interface between the cathode layer and the electrolyte layer to generate oxygen ions (O²⁻). The oxygen ions are conveyed through the electrolyte layer to the anode layer and then reacted with a fuel gas, for example, methane (CH₄), supplied to the anode layer. As a result of the reaction, water (H₂O) and carbon dioxide (CO₂) are finally produced. In this reaction, as the oxygen ions can emit electrons, there is produced a potential difference between the cathode layer and the anode layer. It is therefore possible to generate electricity, in the fuel cell, if electrically conductive lead wires are connected to each of the cathode layer and the anode layer because electrons in the anode layer can be introduced through the lead wires to the cathode layer. Note that, in this type of fuel cell, the temperature of the fuel cells is generally about 1,000°C. Moreover, although not described herein, many improvements have been made in conventional solid oxide fuel cells to simplify the system or structure of the cells, to lower the driving temperature of the cells and to improve the durability of the cells.

In the fuel cell described above, the fuel cell units of the solid oxide fuel cell are contained in a chamber. However, recently, to simplify the constitution of the fuel cells, to reduce the size and weight of the cells and to produce the cells at a reduced cost, there has been suggested a solid oxide fuel cell of a type capable of generating electricity upon heating the fuel cell with the heat from a flame where the fuel cell is disposed in or adjacent to the flame and the fuel cell is maintained at its operating temperature by the application of the heat of the flame. In particular, using this type of the fuel cell, as the flame can be directly utilized in electricity generation, it becomes possible to shorten the time necessary to obtain the desired electricity generation.

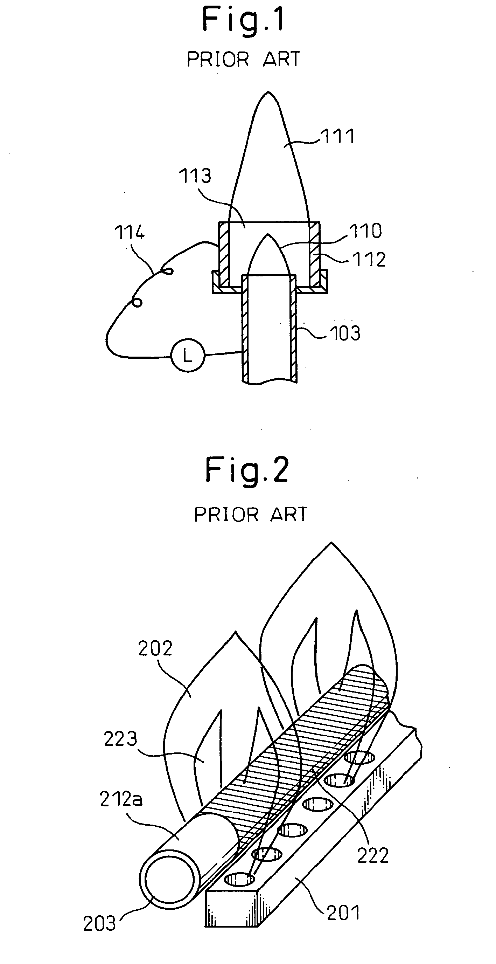

As one example of the solid oxide fuel cell utilizing a flame, Japanese Unexamined Patent Publication (Kokai) No. 5-60310 describes a combustion apparatus comprising a means for supplying a gaseous fuel or an evaporating fuel and a combustion space in which the supplied fuel is combusted with air introduced thereto, characterized by providing a solid oxide fuel cell comprising a porous ceramic, a zirconia layer and electrodes around the combustion space. One example of such a combustion apparatus is illustrated in Fig. 1, in which a fuel cell 112 is surrounded with a combustion space 113. In a burner 113, a primary flame 110 and a secondary flame 111 are discretely formed upon combustion of the fuel. The reference numeral 114 indicates a wire for guiding the generated power.

Further, Japanese Unexamined Patent Publication (Kokai) No. 6-196176 describes a fuel cell comprising a tubular solid oxide fuel cell. One example of the fuel cell is illustrated in Fig. 2. The fuel cell unit 203 of the fuel cell comprises a solid electrolyte tube 212a of zirconia, an anode layer 222 as a fuel electrode formed in an outer surface of the tube 212a and a cathode layer (not shown) as an air electrode formed in an inner surface of the tube 212a. In the illustrated fuel cell, the fuel cell unit 203 is disposed in a flame 202 produced in a combustion apparatus 201 to which a fuel gas is supplied, in such a manner that an anode layer 222 is exposed to a reducing flame portion 223 of the flame 202. When the fuel cell unit 203 is disposed in the flame 202 as is illustrated, it becomes possible to carry out electricity generation using, as a fuel, the radical components contained in the reducing flame portion 223.

Solid oxide fuel cells such as those described above with reference to Figs. 1 and 2, in which electricity generation is carried out by directly contacting the fuel cell unit with a flame (hereinafter, also referred to as a direct flame-contacting fuel cell), as describe above, can shorten the time necessary to obtain the desired electricity generation and simplify the structure of the fuel cells, and thus they can easily ensure advantages such as a reduction in the size and weight of the cells and a reduction in the production cost.

Moreover, in view of these notable advantages, the inventors of this application have intensively and widely studied improvement of the direct flame-contacting fuel cells. As the demand for direct flame-contacting fuel cells is still increasing, it is now desired to provide an improved direct flame-contacting fuel cell which can simultaneously satisfy the requirements for a sufficiently increased level of electrical energy and electromotive force, in addition to ensuring the above advantages, and also to ensure a continuity or maintenance of the sufficiently increased electromotive force.

Accordingly, an object of the present invention is to provide an improved solid oxide fuel cell which has a shorter the time necessary to obtain the desired power generation of the fuel cell, to simplify the structure of the fuel cell and to reduce the size, weight and production cost of the fuel cell, and also which can satisfy the requirements for both of the electrical energy and the electromotive force in the fuel cell, while ensuring a continuity of the electromotive force.

Another object of the present invention is to provide an improved solid-oxide fuel cell which has little combustion-originated soot and dust in the combustion chamber used in combination with the fuel cell.

Also, another object of the present invention is to provide an improved solid oxide fuel cell which enables effective use of a space in the combustion chamber.

These and other objects of the present invention will be easily appreciated from the following detailed explanation of the present invention.

### Summary of the Invention

To accomplish the above objects, the inventors of this application intensively studied to improve the solid oxide fuel cells, and found that it is effective to constitute the solid oxide fuel cell as a direct flame-contacting fuel cell in which a fuel cell unit is disposed near the flame produced by the combustion of a fuel in the combustion chamber, and also to constitute the combustion chamber for the fuel as a cylindrical body having a top wall, provided with an opened area, and a side wall defined by the fuel cell unit.

Accordingly, the present invention resides in a solid oxide fuel cell in which one or more fuel cell units of the fuel cell are disposed within or in proximity to a flame, produced upon combustion of a fuel material, and is exposed to the flame, thereby generating electricity, in which
the fuel cell is provided with a combustion chamber for combusting the fuel material,
the combustion chamber has a configuration of a cylinder, and a side wall of the cylindrical combustion chamber is defined by the fuel cell units of the fuel cell, and
the fuel cell units comprise a substrate consisting of a solid electrolyte, an anode layer formed on a combustion chamber side of the substrate and a cathode layer formed on another side of the substrate opposed to the anode layer.

As can be understood from the following detailed description of the present invention, according to the present invention, as the flame is applied to the fuel cell for the purpose of generating electricity, the electricity generation time or electromotive time can be shortened in the resulting fuel cell and, as the constitution of the fuel cell can be simplified, small and low-weight fuel cells can be easily realized along with a reduction in the production cost.

Further, contrary to conventional solid oxide fuel cells, according to the present invention, as the combustion chamber has the specific constitution described above and a solid fuel is used as a fuel material, a sufficiently increased electrical energy and a sufficiently increased electromotive force can be simultaneously provided and a good continuity can be ensured in the electromotive force of the fuel cell. This is because, according to the present invention, the solid fuel can be effectively subjected to a combustion process, and thus it can effectively contribute the anode reaction of the fuel cell. Furthermore, as the size of the fuel cell can be freely varied depending upon the amount of the fuel to be used, it becomes possible to provide a fuel cell capable of responding to needs in different fuel cell fields.

Moreover, according to the present invention, as the amount of the soot and dust generated as a result of the combustion of the fuel in the combustion chamber can be diminished to a negligibly small level; it can largely contribute the environmental protection. Further, in view of the reduction in the amount of the reduced soot and dust, it becomes possible to simplify the maintenance of the fuel cell and reduced the cost.

In addition, according to the present invention, as the top wall of the combustion chamber has an opened area, the resulting open space in an upper portion of the combustion chamber can be effectively utilized, if desired. For example, as heat can be discharged from the opened area, the heat can be utilized for the purpose of boiling water or cooking, for example.

As described below, the fuel cell of the present invention is generally used alone or two or more fuel cells of the present invention are used in combination. However, according to the present invention, it is also preferred to use the fuel cell of the present invention in combination with a secondary battery. This is because the fuel cell of the present invention may result in a disturbance in the output electricity of the fuel cell because of the use of a solid fuel as the fuel material, but such an electricity disturbance problem can be solved by the secondary battery, because the secondary battery can store the electricity generated in the fuel cell, thereby stably providing the electricity.

### Brief Description of the Drawings

Figure 1 is a cross-sectional view illustrating one example of the prior art combustion apparatus provided with the solid oxide fuel cell;
Fig. 2 is a cross-sectional view illustrating another example of the prior art combustion apparatus provided with the solid oxide fuel cell;
Fig. 3 is a perspective view illustrating one preferred embodiment of the solid oxide fuel cell according to the present invention;
Fig. 4 is a cross-sectional view of the fuel cell of Fig. 3 taken along line II-II;
Fig. 5 is a perspective view illustrating one preferred embodiment of the fuel cell unit used in the solid oxide fuel cell according to the present invention;
Fig. 6 is a perspective view illustrating another preferred embodiment of the fuel cell unit used in the solid oxide fuel cell according to the present invention;
Fig. 7 is a cross-sectional view illustrating another preferred embodiment of the solid oxide fuel cell according to the present invention;
Fig. 8 is a cross-sectional view illustrating another preferred embodiment of the solid oxide fuel cell according to the present invention;
Fig. 9 is a cross-sectional view illustrating another preferred embodiment of the solid oxide fuel cell according to the present invention;
Fig. 10 is a cross-sectional view illustrating one preferred embodiment of the partitioned cell members constituting the fuel cell unit;
Fig. 11 is a cross-sectional view illustrating another preferred embodiment of the partitioned cell members constituting the fuel cell unit;
Fig. 12 is a cross-sectional view illustrating another preferred embodiment of the partitioned cell members constituting the fuel cell unit;
Fig. 13 is a cross-sectional view illustrating another preferred embodiment of the partitioned cell members constituting the fuel cell unit; and
Fig. 14 is a cross-sectional view illustrating one preferred embodiment of the fuel cell unit formed upon combination of the partitioned cell members.

### Detailed Description

The fuel cell according to the present invention resides in a solid oxide fuel cell (SOFC), especially a direct flame-contacting fuel cell in which in which the fuel cell units are disposed near the flame to expose them to the heat from the flame, thereby inducing power generation. Note that, hereinafter, the fuel cell of the present invention is described with reference to the specific fuel cell in which the fuel cell units are disposed near the flame, but, if desired, at least a part of the fuel cell units may disposed in an inner area of the flame in the practice of the present invention.

The fuel cell of the present invention can be advantageously carried out in different embodiments. The fuel cell of the present invention includes, but not restricted to, the preferred embodiments described below.

First, the solid oxide fuel cell of the present invention is characterized in that its combustion chamber for burning a fuel to generate flame is in the form of a cylinder. The term "cylinder" used herein generally means a cylindrical can-type body, but if desired in view of the design, application and others of the fuel cell, it may include configurations other than the cylinder such as a cubic can-type body and others. In principal, the cylinder preferably has a top-opened structure for additionally and effectively utilizing the used and discharged heat.

Further, it is an important constitutional feature of the present invention that the combustion chamber is not intended to be used only as a chamber for burning the fuel as in the conventional fuel cells, but it is intended to be used as a constitutional member of the fuel cell units, in addition to being used as the burning chamber itself. That is, according to the present invention, a side wall of the cylindrical combustion chamber can constitute the "fuel cell units" of the fuel cell which are the central function section of the fuel cell. Basically, the fuel cell unit of the fuel cell is constituted from a substrate consisting of a solid electrolyte, an anode layer (fuel electrode) formed on a combustion chamber-sided surface of the substrate and a cathode layer (air electrode) formed on another side surface of the substrate opposed to the anode layer.

According to the present invention, various remarkable functions and effects which were not expected in the conventional solid oxide fuel cells can be realized as a result of the formation of a wall of the combustion chamber from the fuel cell units. For example, as the fuel cell units of the fuel cell are disposed in such a manner that they constitute a substantially entire area of the side wall of the combustion chamber, the electricity generation time can be shortened, the cell structure can be simplified, and the size, the weight and the production cost of the fuel cell can be lowered and, more notably, the anode reaction between the flame and the fuel cell units can be attained with a very good efficiency. This is because, according to the present invention, the anode layers of the fuel cell units can be uniformly contacted with the flame and thus hydrocarbons, hydrogen and radicals such as OH, CH, C₂, O₂H and CH₃ contained in the flame can be effectively utilized in the anode reaction.

Next, the fuel cell units of the fuel cell are described with regard to the constitution thereof. The fuel cell units, as is described hereinafter, may be constituted from a single cell member or they may be constituted from two or more partitioned cell members in combination. In each of these constitutions, the cell members are basically constituted from the substrate of the solid electrolyte as well as the anode layer and the cathode layer which are applied to the opposed main surfaces of the substrate, respectively. The cell members may further comprise lead wires connected to the anode and cathode layers and, if desired, mesh-like metallic member or others embedded in or laminated to the anode and/or cathode layers. The lead wires may be formed from the electrically conducting material such as silver, gold and platinum.

In the practice of the present invention, the substrate of the solid electrolyte is not restricted to a specific material. The substrate may be formed from the conventional solid electrolyte materials which include, but are not restricted to:
(a) zirconia-based ceramics such as YSZ (yttria-stabilized zirconia), ScSZ (scandia-stabilized zirconia), and these and other stabilized zirconia further doped with Ce, Al or other metals;
(b) ceria-based ceramics such as SDC (samaria-doped ceria) and GDC (gadllia-doped ceria); and
(c) LSGM (lanthane gallate) and bismuth oxide-based ceramics.

Further, in the practice of the present invention, the anode layer is not restricted to specific material. The anode layer may be formed from the conventional anode materials which include, but are not restricted to:
(a) cermets, for example, cermets comprising nickel and ceramics such as yttria-stabilized zirconia-based ceramics, scandia-stabilized zirconia-based ceramics or ceria-based ceramics (SDC, GDC, YDC and the like);
(b) sintered bodies containing as a principal component thereof electrically conducting oxides in an amount of 50 to 99 wt.%, wherein the conducting oxides include, for example, nickel oxide having solid-dissolved lithium; and
(c) the anode materials (a) or (b) having incorporated therein about 1 to 10 wt.% of the metal of the platinum group elements or oxides thereof.

Among these anode materials, the sintered bodies (b) containing conducting oxides, as they exhibit an excellent resistance to the oxidation, can prevent an undesirable phenomenon caused due to oxidation of the anode layer such as a reduction in the electricity generation efficiency or stoppage of the electricity generation as a function of an increase of the electrode resistance in the anode layer and a separation of the anode layer from the substrate. Further, nickel oxide having solid-dissolved lithium is suitably used as the conducting oxide. Furthermore, an increased electricity generation efficiency can be obtained by incorporating into these anode materials a metal of the platinum group elements or an oxide thereof.

Similarly, in the practice of the present invention, the cathode layer is not restricted to a specific material. The cathode layer may be formed from conventional cathode materials which include, but are not restricted to, manganic acid, gallium acid or cobalt acid compounds of the third group element of the periodic table such as lanthanum having added thereto strontium (Sr), for example, lanthanum strontium manganite, lanthanum strontium cobaltite, samarium strontium cobaltite and the like.

In the fuel cell of the present invention, both of the anode layer and the cathode layer are preferably formed from a porous body of the electrode material, and also, similarly, the solid electrolyte substrate is preferably formed from a porous body of the electrolyte material. According to the present invention, as the electrolyte substrate is formed from the porous body, it can advantageously avoid the prior art problems caused due to use of the dense electrolyte layer. That is, in conventional fuel cells, the solid electrolyte layer has been formed as a layer of the dense electrolyte material and thus it has a poor resistance to the thermal impact and can easily suffer cracking in the layer when the fuel cells are exposed to a sudden change in temperature. Moreover, as the solid electrolyte layer has been generally formed at a larger thickness than the anode and cathode layers, the generation of cracking in the electrolyte layer can further induce chain-wise cracking in other portions of the fuel cells, thereby causing the destruction of the fuel cells.

In particular, according to the present invention, as it is porous, the solid electrolyte substrate can exhibit an increased resistance to thermal shock and thus it can prevent cracking or similar defects in the fuel cells, even if the fuel cells are exposed to a sudden change in temperature, during the electricity generation process, when they are disposed in or near the flame, or even if they are exposed to the heat cycle conditions with remarkable temperature differences. Moreover, in the porous electrolyte substrate, the porosity is preferably at least 10%, because a porosity of less than 10% does not ensure a remarkable increase of the resistance to thermal shock. The inventors of this application have found that good resistance to thermal shock can be obtained when the porous electrolyte substrate has a porosity of not less than 10%, more preferably porosity of not less than 20%. It is considered that when the substrate is porous, a thermal expansion of the substrate upon heating of the fuel cells can be moderated by the fine pores of the substrate.

As described above, the solid oxide fuel cells of the present invention is classified as a direct flame-contacting fuel cell. Accordingly, a fuel material is required to generate a flame which is contacted with the fuel cell. As is well-known in this technical field, a city gas or other gaseous fuel has been generally used in the conventional fuel cells. Contrary to this, according to the present invention, it is contemplated to use a solid fuel material in place of the gaseous fuel in the fuel cells. Using the solid fuel material, the solid fuel material is generally disposed in a lower section of the combustion chamber, however, if desired, the solid fuel material may be disposed in a middle section of the combustion chamber in view of increasing a combustion efficiency, and a contact efficiency, of the flame and the fuel cell units.

In the practice of the present invention, the solid fuel material used includes a wide variety of solid fuel materials which are conventionally used as a fuel in different combustion apparatuses. Typical examples of the suitable solid fuel material include, but are not restricted to, a wood material, biomass resource, paraffin-based solid fuel, alcohol-based solid fuel and others. These fuel materials may be used alone or they may be used as a mixture or combination of two or materials. Moreover, these fuel materials may be used in different forms which include, for example, blocks, chips, pellets and powders. Especially, wood chips are considered to be suitable in the practice of the present invention, because they are easily available at a low cost and are excellent in the recycling efficiency. Moreover, if desired, an optional liquid fuel material may be additionally used in combination with the solid fuel material in order to assist the combustion of the solid fuel material.

According to the present invention, as the solid fuel material is specifically used as the fuel of the fuel cells, the combustion of the fuel can be effectively started and contributed in the anode reaction in the fuel cells. In particular, the fuel cells of the present invention are noteworthy in that the produced flame and the resulting anode reaction can be freely controlled by selectively changing the types, forms and amounts of the solid fuel material used.

In the fuel cells of the present invention, the combustion chamber provided with the fuel cell units as a chamber wall or side wall thereof can be modified within the scope of the present invention in order to improve the structures, performances and others of the fuel cells. For example, it is preferred that the combustion chamber is provided with at least one air supplying opening in an optional position or sites of the chamber for the purpose of enabling it to contribute the combustion of the fuel material and also to receive a sufficient amount of air and supply the same to the anode layer. Generally, it is preferred that the air supplying opening is provided in a bottom section or wall of or a lower section of the side wall of the combustion chamber. If desired, a solid fuel-supporting member such as fire grate may be disposed in a bottom wall of the combustion chamber, while utilizing an opening of the fuel-supporting member as the air supplying opening.

In addition to the air supplying opening, the side wall of the combustion chamber may be further provided with at least one air-introducing perforation or slit. For example, the air-introducing perforations can be formed by boring two or more small or other openings, apart from each other as a predetermined distance, in any optional positions or sites of the side wall of the combustion chamber. Similarly, the air-introducing slits can be formed by cutting two or more longitudinally extending gaps or others, apart from each other at a predetermined distance, in any optional positions or sites of the side wall of the combustion chamber. Alternatively, when the fuel cell units are formed from the combination of two or more partitioned cell members, a gap between the adjacent cell members may be used as the air-introducing slit.

In the fuel cells of the present invention, the chamber wall of the combustion chamber by which the fuel cell units of the fuel cell are defined is generally constituted from a single layer of the fuel cell units, but, if desired, the chamber wall may be constituted in the form of a composite wall structure consisting of at least two layers including a wall layer of the fuel cell units. Note in the composite wall structure that the innermost layer of the composite walls is preferably constituted from a wall layer made of the fuel cell units and the remaining layers are constituted from the conventional wall material. Of course, if desired, among the remaining layers, the second, third, etc. layers from the innermost layer may be also formed from the fuel cell units. In any case, in the composite wall structure of the present invention, it is necessary to create a gap between the adjacent wall layers so that a sufficient amount of air can be guided through the gap, and thus the gap has to be a configuration and size ensuring such a guide for air. As a result, air in an outside of the outermost wall layer of the combustion chamber is supplied through the gap to combustion chamber. In practice, if the composite wall structure is applied to the chamber wall of the combustion chamber, the introduced air can be gradually heated with the heated wall layers during passage of the gap between the wall layers, and thus the heated air can be supplied to the combustion chamber. This air supplying mechanism is effective to avoid the prior art problem concerning the rapid cooling of the fuel cell units which was caused due to direct supply of air into the combustion chamber.

Further, it is preferred in the fuel cells that the combustion chamber is further provided with an air-supplying mechanism for the combustion chamber such as air fan and air blower to assist the supply of air to the combustion chamber and also to constantly supply fresh air to the combustion chamber. The air supply mechanism is preferably disposed in the neighborhood of the air supplying opening, for example, to ensure the forced supply of air.

In addition to the above features, in the fuel cells of the present invention, the fuel cell units may be constituted as a single cell unit or in the form of a single cell member, or they may be constituted by combining two or more cell members. That is, according to one preferred embodiment of the present invention, the fuel cell units can be formed from a single cell member which comprises a substrate of the solid electrolyte, an anode layer and a cathode layer. The substrate, the anode layer and the cathode layer each can be formed from the materials described above.

In another preferred embodiment of the present invention, the fuel cell units can be constituted from a combination of two or more partitioned cell members. In the fuel cell units, the partitioned cell members are disposed in a lengthwise direction, a crosswise direction or a lengthwise and crosswise direction to form the desired cell units, and the cell members each comprises the substrate of the solid electrolyte, the anode layer and the cathode layer. In the fuel cell units, the cell members are electrically connected in series or in parallel from each other to complete the desired fuel cell.

In the practice of the present invention, when the fuel cell units are constituted from a combination of two or more partitioned cell members, it is particularly preferred that the anode layer and the cathode layer each is connected in series in the adjacently disposed cell members. Further, the connection in series of the partitioned cell members can be advantageously carried out with different methods, typical embodiments of which are described below.

According to the first connection method, one common substrate is provided to use as the solid electrolyte substrate for the two or more partitioned cell members of the fuel cell. That is, the partitioned cell members each is constituted from the common substrate and the dedicated anode and cathode layers. In this fuel cell, an anode layer of one partitioned cell member is electrically connected in series through a conductor via, applied in a full thickness of the common substrate, to a cathode layer of the adjacent partitioned cell member.

According to the second connection method, one common substrate is provided to be used as the solid electrolyte substrate for two or more partitioned cell members of the fuel cell. That is, the partitioned cell members each is constituted from the common substrate and the dedicated anode and cathode layers. In this fuel cell, an anode layer of one partitioned cell member is electrically connected in series through a conductor wire, extended and passed through a via-hole of the common substrate, to a cathode layer of the adjacent partitioned cell member.

According to the third connection method, a dedicated solid electrolyte substrate is provided for each of the two or more partitioned cell members of the fuel cell. That is, the partitioned cell members each is constituted from the dedicated substrate, anode layer and cathode layer. In this fuel cell, an anode-sided metal mesh is embedded or secured in an anode layer of one cell member (first cell member), and similarly a cathode-sided metal mesh is embedded or secured in a cathode layer of the cell member (second cell member) adjacent to the first cell member. The metal mesh of the first cell member may be the same with or different from the metal mesh of the second cell member. The metal mesh of the first cell member is electrically connected in series through a conductor wire, extended and passed through a gap between the adjacently disposed first and second cell members, to the metal mesh of the second cell member.

According to the fourth connection method, a dedicated solid electrolyte substrate is provided for each of the two or more partitioned cell members of the fuel cell. That is, the partitioned cell members each is constituted from the dedicated substrate, anode layer and cathode layer. In this fuel cell, an anode-sided metal mesh is embedded or secured in an anode layer of one cell member (first cell member), and similarly a cathode-sided metal mesh is embedded or secured in a cathode layer of the cell member (second cell member) adjacent to the first cell member. The metal mesh of the first cell member may be the same with or different from the metal mesh of the second cell member. The metal mesh of the first cell member is electrically connected in series, through a connecting metal mesh, extended and passed through a gap between the adjacently disposed first and second cell members, to the metal mesh of the second cell member. Preferably, the connecting metal mesh may be either the metal mesh of the first cell member or the metal mesh of the second cell member, and if desired, it may be formed from any one of other metal meshes.

Of course, if desired, the first to fourth connection methods described above may be used in combination or they may be used in combination with other connection methods.

Moreover, it is preferred in the fuel cells of the present invention that the side wall of the combustion chamber defining the fuel cell units and, if desired, other walls of the combustion chamber, further comprise a cylindrical thermal insulating wall surrounding an outer surface of the chamber wall such as the side wall surface and the bottom wall surface. The thermal insulating wall may be formed from any one of the conventional insulating materials at different desired thicknesses, and it may be applied to the outer wall of the combustion chamber through an adhesive or by using a mechanical fitting means. Suitable insulating materials include, but are not restricted to, glass wool, inorganic insulating materials and others.

More particularly, the fuel cell of the present invention and the fuel cell units used in the present fuel cell (a single cell member or partitioned cell members) each can be produced by using a conventional method generally used in the production of the fuel cells or using the conventional method after its modification for the practice of the present invention. For example, the partitioned cell members can be produced as follows.

First, the materials for providing a layer of the solid electrolyte in the form of generally powders are blended at the predetermined mixing ratio, followed by shaping the blend into a plate-like molded article or green sheet. Press molding or others may be used to obtain the green sheet. Next, the resulting green sheet is fired and sintered to obtain a substrate as a layer of the solid electrolyte. In the production of the substrate, it is possible to add an optional additive such as a foam generator and others, especially to control the type of the powders and mixing ratio of the foam generator used or further to control the firing conditions such as a firing temperature and time and application of the provisional firing, thereby ensuring to produce the substrates consisting of the solid electrolyte having different porosities.

Next, formed on the solid electrolyte substrate are an anode layer and a cathode layer in a number necessary for the production of the targeted partitioned cell members. According to the present invention, as the anode layer and the cathode layer are required to be electrically connected through a conducting via, a conductor wire or other conductive means, the anode layer and the cathode layer can be formed in any desired configurations depending upon their connection methods and other conditions. For example, if it is contemplated to provide a protrusion to each of the anode layer and the cathode layer and connect them through their protrusions and a conductor via, through-holes can be bored in the protrusion-providing sites of the substrate using the well-known methods such as drilling.

After the formation of the through-holes in the solid electrolyte substrate as described above, a conductor-via-providing paste consisting of a suitable electrically conducting ceramic is applied to the through-holes formed in the sites, corresponding to the protrusions of the anode and cathode layers, on the substrate. Further, the same conductive paste is applied in a pattern of the anode layer to one surface of the substrate, and also is applied in a pattern of the cathode layer to another and opposed surface of the substrate. After application of the conductive paste to the substrate, the substrate is fired and sintered to obtain a sheet of the solid electrolyte substrate having incorporated therein two or more fuel cell units, that is, the partitioned cell members of the present invention.

Further, when the fuel cell units are produced in accordance with the method described above, the resulting partitioned cell members can be sequentially connected in series. That is, an anode layer of one cell member is electrically connected through a conductor via, passed through the substrate, to a cathode layer of the next and adjacent cell member. Such a connection using the conductor via enables completion of a targeted fuel cell unit comprising two or more partitioned cell members connected in series.

The fuel cell units or partitioned cell members according to other embodiments of the present invention can be easily produced as in the manner described above, or by using other methods within the scope of the present invention. For example, in place of using conductor vias filled in the through-holes of the substrate, an anode layer and a cathode layer may be connected with a conductor wire which is inserted to the through-holes or other openings of the substrate. Alternatively, an anode layer and a cathode layer may be connected with a conductor wire which is inserted to a gap or slit between the adjacent partitioned cell members.

As described above, the partitioned cell members may further comprise a metal mesh or other similar material in or on the anode and cathode layers thereof, and further such a metal mesh or others may be used as a means for connecting and securing the anode and cathode layers. When the metal mesh or others are used as the connection means, they can be fabricated into any desired configuration in conformity with the configuration of the targeted partitioned cell members, followed by applying the fabricated metal mesh or others to the anode and cathode layers of the cell members. Generally, the metal mesh or others can be applied to the anode and cathode layers by embedding, fixing and other means.

Preferably, the metal mesh is formed from any metal material which has a good compatibility, in its thermal expansion coefficient, with the anode and cathode layers to which the metal mesh is embedded or fixed, and also has a good thermal resistance. Typically, it is desired that the mesh-like article is fabricated from the metal such as platinum or an alloy containing platinum. However, as platinum or an alloy thereof is expensive, in practice, other metals such as stainless steel, such as SUS 300 series (304, 316 and others) and SUS 400 series (430 and others) and Hastelloy™ may be used in the formation of the metal mesh material. It should be noted that these metals are commercially available at a low cost. A mesh or opening size of the metal mesh may vary depending upon the constitution of the fuel cell units and other factors and, generally, it is in a range of about 1 to 5mm square, more preferably in the range of about 2 to 3mm square.

The metal mesh can contribute to an increase in the current collecting property and the mechanical strength of the fuel cells, in addition to the above-described functions of connecting and fixing the adjacent partitioned cell members. Further, because it has a higher thermal conductivity than the electrode materials and the electrolyte materials, the metal mesh can increase the uniformity of the heat generated in the fuel cells and, thus, can increase the effect of increasing the resistance of the fuel cells to thermal shock. Especially, according to these embodiments of the present invention, as the metal mesh is embedded or fixed to the anode and cathode layers, it becomes possible to rapidly and uniformly heat the fuel cell units, while avoiding cracking in the solid electrolyte substrate. Further, even if cracking is induced in the substrate, it becomes possible to continue electricity generation in the fuel cells, insofar as disconnection is not induced in the metal wire or metal mesh connecting the partitioned cell members.

The fuel cells of the present invention have a smaller size and a lower weight and can be produced at a lower production cost in comparison with the prior art fuel cells, and their maintenance can be easily carried out. Thus, the fuel cells can be advantageously used in a wide variety of technical fields. For example, the fuel cells of the present invention can be used as an electric source for a lighting LED (light-Emitting Diodes), a display LCD (Liquid Crystal Devices), driving portable radios, TVs, PDAs (Personal Digital Assistants) and other electronic devices. Further, they can be also used as an electric source for outdoor sports, for emergency purposes and at a time of electrical failure.

Next, the fuel cells according to the present invention will be further described with reference of the accompanying drawings. Note, however, that the illustrated fuel cells are only examples of the fuel cells according to the preferred embodiments of the present invention and, as will be appreciated by a person skilled in the art, the constitution, size and others of the fuel cells can be changed or modified within the scope of the present invention. As the materials suitable for the formation of the members constituting the fuel cells have been described hereinabove, they are not described in the following description referred to the drawings.

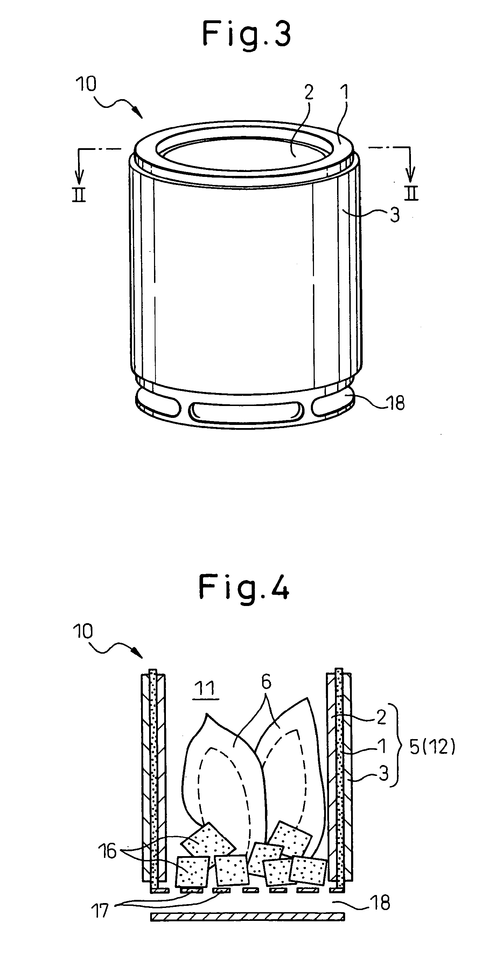

Fig. 3 is a perspective view illustrating one preferred embodiment of the solid oxide fuel cell according to the present invention and Fig. 4 is a cross-sectional view of the fuel cell of Fig. 3 taken along line II-II thereof. As can be understood from these drawings, the illustrated fuel cell 10 has a combustion chamber 11 and a chamber wall 12 of the combustion chamber 11 is constituted from a single fuel cell unit 5 which is also referred in the present invention to as a "fuel cell member". The fuel cell unit 5 is constituted from a substrate 1 consisting of a solid electrolyte, an anode layer 2 formed on a combustion chamber side of the substrate 1 and a cathode layer 3 formed on another side of the substrate 1 opposed to the anode layer 2. The illustrated combustion chamber 11 has a configuration of a circular cylinder but, if desired, the combustion chamber 11 may have other configurations such as a tube with square cross-section or an elliptical cylinder.

Further, the combustion chamber 11 has a cast iron-made flame grid 17 in a bottom surface thereof. Using the flame grid 17, it becomes possible to support a solid fuel (wood chips in the illustrated instance) 16 in the combustion chamber 11 and also to introduce fresh air, into the chamber 11, though an air supplying opening 18 and then the openings of the flame grid 17 to an interior of the chamber 11. In the illustrated instance the combustion chamber 11 has an oval air supplying opening 18 for the purpose of easy removal of the used solid fuel including ashes, but the air supplying opening 18 having other configurations may be used in the practice of the present invention, if desired. Upon combustion of the solid fuel 16 in the combustion chamber 11, flame 6 is produced and is contacted with the anode layer 2 of the fuel cell unit 5. As a result, electricity is created as a function of the anode reaction originated from the heat of the flame 6.

Hereinabove, use of the single fuel cell unit in the fuel cell was described above with reference to the fuel cell 10 of Figs. 3 and 4. However, if desired, the fuel cell unit may be divided into two or more cell members to constitute a fuel cell unit consisting of a combination of two or more partitioned fuel cell members. In this embodiment of the fuel cell unit, each of the partitioned cell members has to be electrically connected from each other so that the cell members can act as a fuel cell unit.

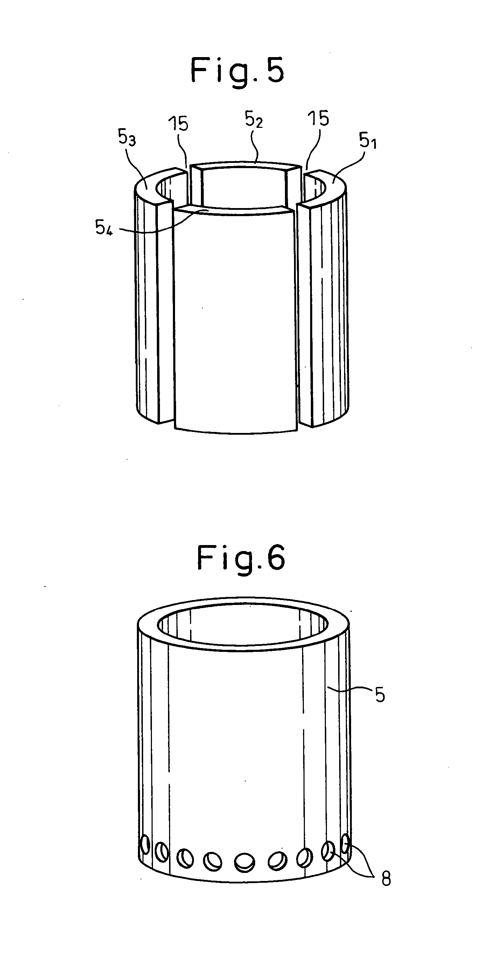

Although a solid electrolyte substrate, an anode layer and a cathode layer are omitted from the drawing in order to simplify the explanation of the constitution, Fig. 5 illustrates a solid oxide fuel cell having four longitudinally or lengthwise divided fuel cell unit, i.e., partitioned cell members 5₁, 5₂, 5₃ and 5₄. Each of the partitioned cell members is electrically connected from each other through its anode and cathode layers, although not illustrated in this drawing. For the electrical connection, a connection means such as a conductor wire or a metal mesh may be used. Further, a gap (slit) 15 formed between the adjacent partitioned cell members can act as an air-introducing perforation or slit for supplying air into a combustion chamber.

As can be appreciated from the above description referring to Fig. 5, the partitioned cell members may be formed by lengthwise separating a chamber wall of the combustion chamber, i.e., fuel cell unit, or they may be formed by crosswise separating the chamber wall. Further, if desired, the partitioned cell members may be formed by lengthwise and crosswise separating the chamber wall. Furthermore, in these cases, the resulting partitioned cell members may be electrically connected to each other in series or in parallel.

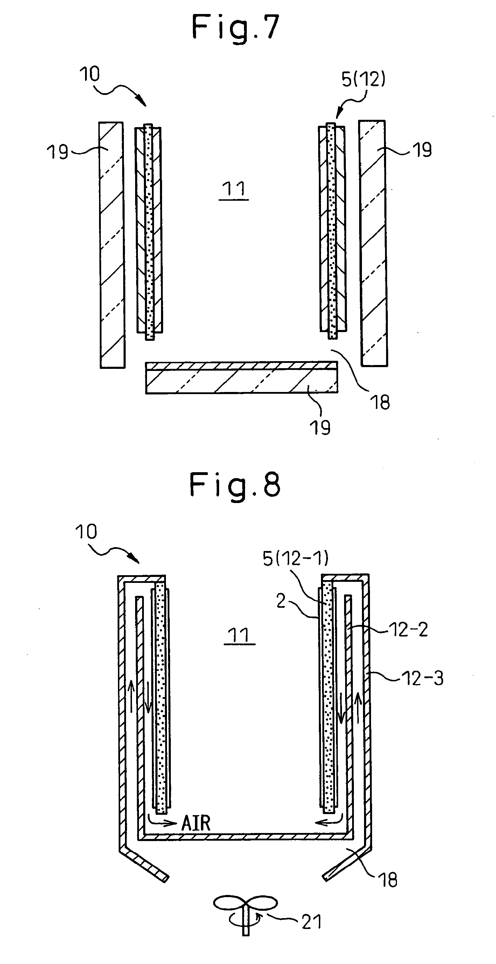

Fig. 6 illustrates a solid-oxide fuel cell of the present invention in which a plurality of air-introducing perforations 8 are provided in a lower section of the fuel cell unit 5 defining a chamber wall of the combustion chamber. As the perforations are contained in the chamber wall, air used for the purpose of contributing to the combustion of the solid fuel and supplied to an anode layer of the fuel cell unit can be effectively introduced into the combustion chamber. Although the air-introducing perforations 8 are provided in the fuel cell unit 5 in the illustrated instance, any other air-introducing means such as one or more slits may be provided in the fuel cell unit 5 in place of or in combination with the perforations. For example, at least one longitudinally extended slit may be fabricated in any suitable position of the chamber wall.

Fig. 7 illustrates a solid-oxide fuel cell 10 of the present invention having the constitution which is substantially the same as that of the fuel cell 10 of Figs. 3 and 4 except that the flame grid was omitted, but the combustion chamber 11 further comprises a cylindrical thermal insulating wall 19 surrounding an outer surface of the chamber wall 12 (fuel cell unit 5). A combustion efficiency of the fuel cell can be notably improved by covering substantially the whole surface of the fuel cell 10 with a thermal insulating material such as glass wool.

Fig. 8 illustrates another solid oxide fuel cell of the present invention in which a chamber wall of the combustion chamber has a composite wall structure, while a single wall structure was applied to the chamber wall of the fuel cells illustrated in Figs. 3 to 6. In the illustrated fuel cell 10, its chamber wall is constituted from three wall layers 12-1, 12-2 and 12-3, and the wall layer 12-1 an inner surface of which is contacted the flame can act as a fuel cell unit 5 of the present invention. In the illustrated instance that the wall layer 12-1 was formed from the fuel cell unit 5 itself but, in view of improving the fabrication of the wall layers and others, it is contemplated that the wall layer 12-1 is integrally formed together with the wall layers 12-2 and 12-3 from the same wall material and then a separately prepared fuel cell unit is applied through, for example, adhesion to an inner surface of the wall layer 12-1. In the fuel cell 10, as is illustrated with an arrow, fresh air into the combustion chamber 11 is guided through gaps formed between the wall layers 12-1, 12-2 and 12-3, and is supplied to combustion chamber 11 while being heated with the heated wall layers while flowing in the gaps. Moreover, the combustion chamber 11 further comprises an air fan 21 as an air-supplying mechanism for accelerating air supply from the air supplying opening 18 to the chamber 11.

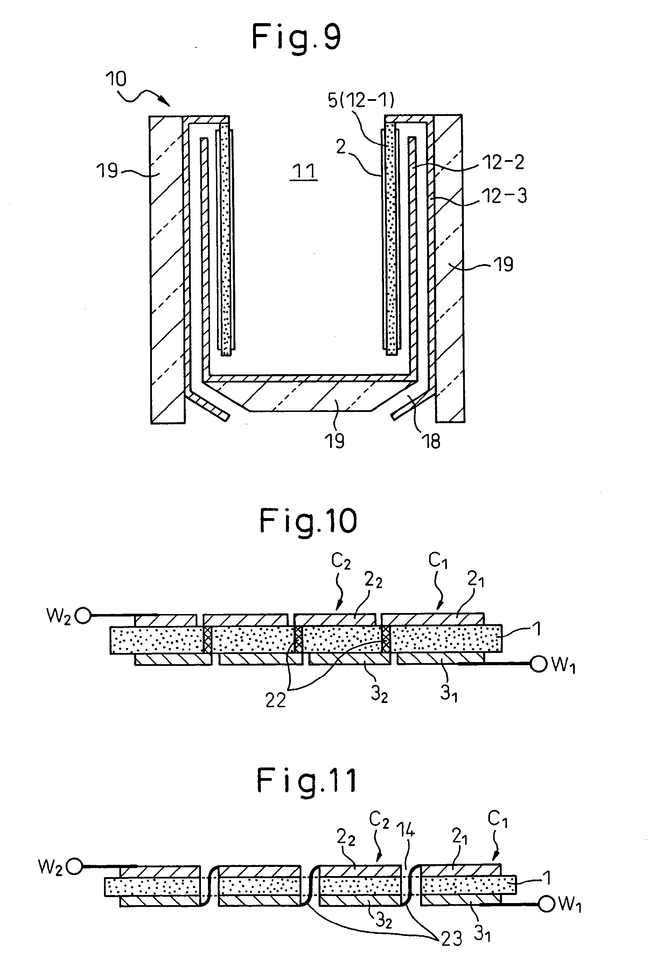

Fig. 9 illustrates a modification of the solid oxide fuel cell 10 of Fig. 8, and the fuel cell 10 further comprises a thermally insulating material 19 such as glass wool. The fuel cell 10 itself may be constituted as in the fuel cell 10 of Fig. 8.

Figs. 10 to 13 each illustrates the method for mutually connecting partitioned cell members with each other when the fuel cell unit is constituted from such partitioned cell members. In these drawings the cell members are shown in the form of a flat plate for ease of explanation but, if desired, they may be suitably curved to provide a fuel cell unit in the form of a circular cylinder.

Referring to Fig. 10, the fuel cell unit is constituted from a plurality of partitioned cell members C₁, C₂, etc. Further, the partitioned cell members each has a solid electrolyte substrate (in the illustrated instance, the substrate is common to all the partitioned cell members) as well as an anode layer and a cathode layer which were applied to the opposite surfaces of the substrate, respectively. For example, referring to the partitioned cell member C₁, an anode layer 2₁ is provided in one surface of the common solid electrolyte substrate 1, and a cathode layer 3₁ is provided in another surface of the same substrate 1. The anode layer 2₁ of the partitioned cell member C₁ is electrically connected through a conductor via 22, filled in a through-hole of the common substrate 1, to a cathode layer 3₂ of the adjacent cell member C₂. As illustrated, a plurality of the partitioned cell members C₁, C₂, etc. are electrically connected in series, and also a lead wire W₁ and a lead wire W₂ are connected to the cathode layer 3₁ of the first partitioned cell member C₁ and an anode layer of the last partitioned cell member, respectively.

Fig. 11 illustrates another fuel cell unit which is substantially the same as that of Fig. 10 except that a conductor wire is used in place of the conductor via and, thus, an anode layer and a cathode layer are electrically connected through the conductor wire. That is, the fuel cell unit is constituted from a plurality of the partitioned cell members C₁, C₂, etc. Further, as can be understood by referring to the partitioned cell member C₁, for example, an anode layer 2₁ is provided in one surface of the common solid electrolyte substrate 1, and a cathode layer 3₁ is provided in another surface of the same substrate 1. The anode layer 2₁ of the partitioned cell member C₁ is electrically connected through a conductor wire 23, passed through a through-hole 14 of the common substrate 1, to a cathode layer 3₂ of the adjacent cell member C₂. As illustrated, a plurality of the partitioned cell members C₁, C₂, etc. are electrically connected in series, and also a lead wire W₁ and a lead wire W₂ are connected to the cathode layer 3₁ of the first partitioned cell member C₁ and an anode layer of the last partitioned cell member, respectively.

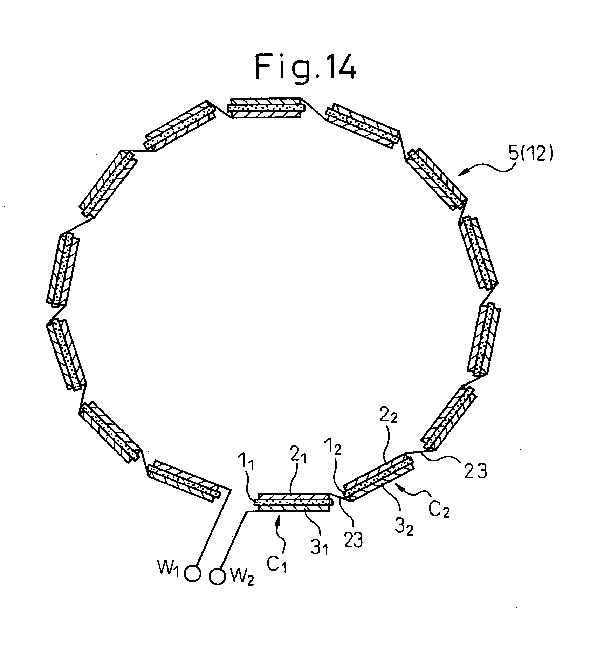

Alternatively, as is described hereinafter referring to Fig. 14, the partitioned cell members C₁, C₂, etc. each may have the its own solid electrolyte substrate 1₁, 1₂, etc. and the anode layer 2₁ of the partitioned cell member C₁ is electrically connected through a conductor wire 23, passed through a gap between the adjacent solid electrolyte substrates, to a cathode layer 3₂ of the adjacent cell member C₂.

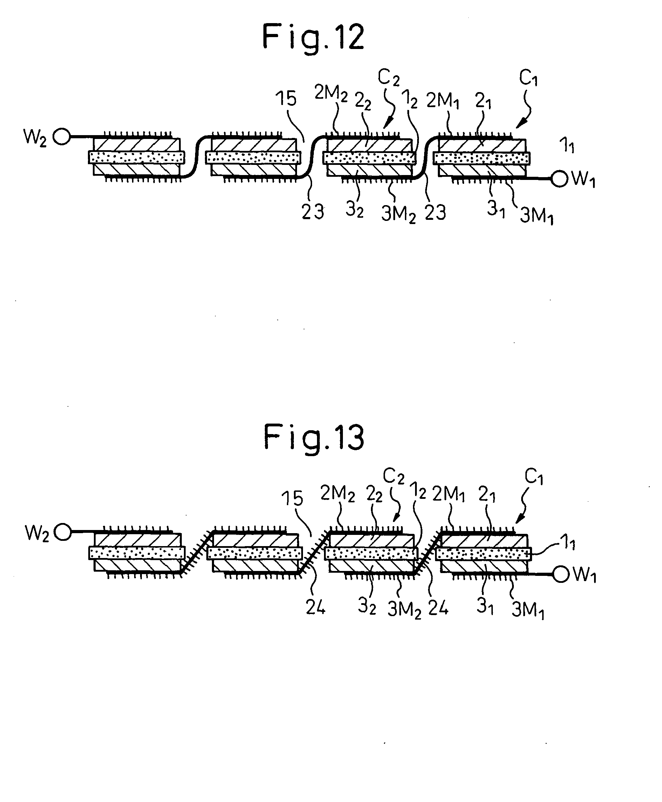

Fig. 12 illustrates a fuel cell unit in which a plurality of the partitioned cell members C₁, C₂, etc. are discretely constituted, a metal mesh is embedded to each of the anode layer and the cathode layer, and in the adjacent partitioned cell members, the anode layer (the embedded metal mesh) and the cathode layer (the embedded metal mesh) in the adjacent cell members are connected through a conductor wire passed through a gap between the adjacent cell members.

That is, as illustrated, the fuel cell unit is constituted from a plurality of the partitioned cell members C₁, C₂, etc., and the partitioned cell members each is constituted from a solid electrolyte substrate, an anode layer and a cathode layer. For example, referring to the partitioned cell member C₁, an anode layer 2₁ having embedded therein a metal mesh 2M₁ is provided in one surface of the solid electrolyte substrate 1₁, and a cathode layer 3₁ having embedded therein a metal mesh 3M₁ is provided in another surface of the same substrate 1₁. The metal mesh 2M₁ of the partitioned cell member C₁ and the metal mesh 3M₂ of the partitioned cell member C₂ adjacent thereto are electrically connected through a conductor wire 23 passed through a gap between the adjacent cell members C₁ and C₂. Thus, a plurality of the partitioned cell members C₁, C₂, etc. are electrically connected in series, and also a lead wire W₁ and a lead wire W₂ are connected to the cathode layer 3₁ of the first partitioned cell member C₁ and an anode layer of the last partitioned cell member, respectively.

Fig. 13 illustrates a fuel cell unit in which a plurality of the partitioned cell members C₁, C₂, etc. are discretely constituted, a metal mesh of the same conductive material is embedded to each of the anode layer and the cathode layer, and in the adjacent partitioned cell members, the anode layer (the embedded metal mesh) and the cathode layer (the embedded metal mesh) in the adjacent cell members are connected through a metal mesh made of the same conductive material passed through a gap between the adjacent cell members.

That is, as is illustrated, the fuel cell unit is constituted from a plurality of the partitioned cell members C₁, C₂, etc., and the partitioned cell members each is constituted from a solid electrolyte substrate, an anode layer and a cathode layer. For example, referring to the partitioned cell member C₁, an anode layer 2₁ having embedded therein a metal mesh 2M₁ is provided in one surface of the solid electrolyte substrate 1₁, and a cathode layer 3₁ having embedded therein a metal mesh 3M₁ is provided in another surface of the same substrate 1₁. The metal mesh 2M₁ of the partitioned cell member C₁ and the metal mesh 3M₂ of the partitioned cell member C₂ adjacent thereto are electrically connected through either of the metal meshes 2M₁ and 3M₂ (For the convenience, the reference number 24 is used to indicate the metal mesh used in the illustrated fuel cell unit). Thus, a plurality of the partitioned cell members C₁, C₂, etc. are electrically connected in series and, also, a lead wire W₁ and a lead wire W₂ are connected to the cathode layer 3₁ of the first partitioned cell member C₁ and an anode layer of the last partitioned cell member, respectively.

Fig. 14 is a cross-sectional view of the fuel cell unit in which a plurality of the partitioned cell members are disposed to form a ring of partitioned cell members. That is, in the illustrated fuel cell unit, a connection of the adjacent cell members is made with a certain connection angle so that the resulting aggregate of the partitioned cell members (fuel cell unit) shows a cylindrical arrangement pattern as a whole, whereas the partitioned cell members were connected at a connection angle of 180°in the fuel cell units described above referring to Figs. 10 to 13 to make a flat-type fuel cell unit.

That is, in the illustrated instance, the fuel cell unit is constituted from a plurality of the partitioned cell members C₁, C₂, etc., and each partitioned cell member is constituted from a solid electrolyte substrate, an anode layer and a cathode layer. For example, referring to the partitioned cell member C₁, an anode layer 2₁ is provided in one surface of the solid electrolyte substrate 1₁, and a cathode layer 3₁ is provided in another surface of the same substrate 1₁. The anode layer 2₁ of the partitioned cell member C₁ and the cathode layer 3₂ of the partitioned cell member C₂ adjacent thereto are electrically connected through a conductive wire 23 passed through a gap between the adjacent cell members C₁ and C₂. Thus, a plurality of the partitioned cell members C₁, C₂, etc. are electrically connected in series, and also a lead wire W₁ and a lead wire W₂ are connected to the cathode layer 3₁ of the first partitioned cell member C₁ and an anode layer of the last partitioned cell member, respectively.

Further, it should be noted in the fuel cell unit of Fig. 14 that although the fuel cell unit is in the form of a cylinder, its partitioned cell members are formed by separating the cylinder along its circumference and the resulting cell members are sequentially connected in series, it is also possible to produce the partitioned cell members by separating the cylinder along its axis so that at least a part of the resulting cell members are connected in parallel.

### EXAMPLES

The present invention will be further described with reference to the examples thereof. However, it should be noted that the present invention is not restricted to the following examples.

### Production of Direct Flame-Contacting Fuel Cell

A combustion chamber having a three-layered. composite wall structure is produced from a coated steel sheet. The chamber wall is constituted from a first cylinder (diameter: about 100mm, height: about 60mm), a second cylinder (diameter: about 107mm, height: about 60mm) and a third cylinder (diameter: about 115mm, height: about 60mm). In the three cylinders, a bottom wall is common to the first cylinder and the second cylinder, an upper portion of the first cylinder is opened, and an area ranging from an upper end of the first cylinder to an upper end of the third cylinder is closed. Thus, in the resulting combustion chamber, a fresh air into the combustion chamber is guided in sequence through a gap between the second and third cylinders and a gap between the first and second cylinders, and finally the air is continuously introduced through a plurality of air-supplying openings (diameter: about 6mm), provided in a lower section of the first cylinder (at a position of about 8mm from the lower end of the cylinder), into the combustion chamber.

On the other hand, a mixed paste of SSC (samarium strontium cobaltite: Sm_{0.5}Sr_{0.5}CoO₃) and SDC (samaria-doped ceria: Ce_{0.8}Sm_{0.2}O₁₉) (mixing ratio of 50wt.% and 50wt.%) is coated over a surface of an about 0.2mm-thick electrolyte layer consisting of SDC to form a cathode layer. Further, a mixed paste of 8mole% Li-doped Ni oxide and SDC (mixing ratio of 25wt.% and 70wt.%) having added thereto 5wt.% of Rh₂O₃ is coated over another surface of the same electrolyte layer to form an anode layer. After application of the mixed paste to both surfaces of the electrolyte layer, the electrolyte layer is contained in a firing furnace and fired at a temperature of about 1,200°C for about 60 minutes. A fuel cell unit having a configuration and size capable of being intimately attached to an inner wall of the first cylinder is thus obtained.

The resulting fuel cell unit is applied and fixed with an inorganic adhesive to an inner wall of the first cylinder of the combustion chamber for the fuel cell produced separately in the above production step. The solid oxide fuel cell having the cell structure similar to that of the fuel cell described above referring to Fig. 8 is thus completed.

Then, the resulting solid oxide fuel cell is operated by adding a suitable amount of wood pellets to a bottom section of the combustion chamber, followed by igniting the wood pellets. A fresh air is supplied to the combustion chamber, while driving an air fan in a lower section of the combustion chamber. The air is heated with the heated cylinder during flowing a gap between the cylinders. During combustion of the wood pellets, some minor variation is observed in the size and intensity of the flame generated. It should be noted, however, in the fuel cell unit applied to an inner wall of the combustion chamber that the flame can be substantially uniformly and continuously contacted with the fuel cell unit. Under such combustion conditions, the electricity generated by the fuel cell is determined to obtain a terminal voltage of 0.56 volts and a maximum power density of 17 mW/cm². From these results, it can be expected that an electrical power of at least 1 watt or more can be stably provided by using the described fuel cell, if the combustion conditions of the wood pellets are optimized and the fuel cell unit is applied to a substantially whole area of the inner wall of the combustion chamber.

## Claims

1. A solid oxide fuel cell in which one or more cell units of the fuel cell are disposed within or in proximity to a flame, produced upon combustion of a fuel material, and are exposed to the flame, thereby generating electricity, in which
the fuel cell is provided with a combustion chamber for combusting the fuel material,
the combustion chamber has a configuration of a cylinder, and a wall of the cylindrical combustion chamber is defined by the cell units of the fuel cell, and
the cell units comprise a substrate consisting of a solid electrolyte, an anode layer formed on a combustion chamber side of the substrate and a cathode layer formed on another side of the substrate. opposed to the anode layer.

2. The fuel cell according to claim 1, in which the fuel material is a solid fuel disposed in a lower section of the combustion chamber.

3. The fuel cell according to claim 2, in which the solid fuel is one member selected from the group consisting of a wood material, biomass resource, paraffin-based solid fuel, alcohol-based solid fuel and a combination thereof.

4. The fuel cell according to any preceding claim, in which the combustion chamber is provided with an air supplying opening capable of contributing to combustion of the fuel material and capable of conducting intake of air to be supplied to the anode layer.

5. The fuel cell according to any preceding claim, in which the wall of the combustion chamber further comprises at least one air-introducing perforation or slit.

6. The fuel cell according to any preceding claim, in which the wall of the combustion chamber further comprises a cylindrical thermal insulating wall surrounding an outer surface of the chamber wall.

7. The fuel cell according to any preceding claim, in which the wall of the combustion chamber has a composite wall structure consisting of at least two wall layers wherein air is guided through a gap formed between the adjacent wall layers, the innermost wall layer adjacent to the combustion chamber is at least constituted from the cell units, and air in an outside of the outermost wall layer is supplied through the gap to combustion chamber.

8. The fuel cell according to any preceding claim, in which the combustion chamber further comprises an air-supplying mechanism.

9. The fuel cell according to any preceding claim, in which the cell units are in the form of a single cell member comprising the substrate consisting of the solid electrolyte, the anode layer and the cathode layer.

10. The fuel cell according to any preceding claim, in which the cell units are constituted from a combination of two or more partitioned cell members, the partitioned cell members being disposed in a lengthwise direction, a crosswise direction or a lengthwise and crosswise direction to form the cell units, and each cell member comprises the substrate consisting of the solid electrolyte, the anode layer and the cathode layer, and are electrically connected in series or in parallel.

11. The fuel cell according to claim 10, in which each anode layer and each cathode layer is connected in series in adjacent cell members.

12. The fuel cell according to claim 11, in which a common substrate consisting of the solid electrolyte is contained in the adjacent cell members, and an anode layer of one cell member is electrically connected through a conductor via, applied through the full thickness of the common substrate, to a cathode layer of the adjacent cell member.

13. The fuel cell according to claim 11, in which a common substrate consisting of the solid electrolyte is contained in the adjacent cell members, and an anode layer of one cell member is electrically connected in series through a conductor wire extended and passed through a via-hole of the common substrate, to a cathode layer of the adjacent cell member.

14. The fuel cell according to claim 11, in which a substrate consisting of the solid electrolyte is contained in each of the adjacent cell members, and an anode-side metal mesh embedded or secured in an anode layer of one cell member is electrically connected in series through a conductor wire extended and passed through a gap between the adjacent cell members, to a cathode-side metal mesh embedded or secured in a cathode layer of the adjacent cell member.

15. The fuel cell according to claim 11, in which a substrate consisting of the solid electrolyte is contained in each of the adjacent cell members, and an anode-side metal mesh embedded or secured in an anode layer of one cell member is electrically connected in series through a connecting metal mesh extended and passed through a gap between the adjacent cell members, to a cathode-side metal mesh, embedded or secured in a cathode layer of the adjacent cell member, which may be the same or different from the anode-sided metal mesh, the connecting metal mesh being either the anode-side metal mesh or the cathode-side metal mesh.
